# EUROPÄISCHE PATENTANMELDUNG

(11) **EP 1 009 088 A2**
(43) Veröffentlichungstag der Anmeldung: **14.06.2000**
(21) Anmeldenummer: 99123872.6
(22) Anmeldetag: 02.12.1999
(51) Int. Cl.: H02K 7/116

(54) **Elektrischer Stellantrieb für ein Kraftfahrzeug**

(30) Priorität: 09.12.1998 DE 19856715
(71) Anmelder: Hella KG Hueck & Co., 59552 Lippstadt (DE)
(72) Erfinder: Schiewer, Norbert, 59555 Lippstadt (DE)

(57) **Zusammenfassung**

Beschrieben wird ein elektrischer Stellantrieb für ein Kraftfahrzeug mit einem drehrichtungsumkehrbaren Antriebsmotor und einem diesem nachgeordneten Getriebe, bei dem das Getriebe ein Stirnradgetriebe und ein Schneckengetriebe umfaßt, wobei das mit der Motorwelle verbundene Antriebsritzel und das Abtriebsschneckenrad durch ein ein Stirnrad und eine Schnecke aufweisendes Stufenrad verbunden sind und wobei das Stufenrad auf einer Achse zwischen zwei Anlauffedern gelagert ist, welche das Stufenrad in den Endpostionen des Stellbereiches jeweils mit einer axialen Federkraft beaufschlagen.

Der maximale Stellbereich ist dabei entweder durch die internen Gehäuseanschläge oder, in den meisten Fällen, durch die externen Anschläge des durch die Abtriebswelle angetriebenen Gegenstandes vorgegeben. Wird einer der Anschläge erreicht, so kämmt die Schnecke an dem nun feststehenden Abtriebszahnsegment, wodurch sich das Stufenrad auf seiner Achse in Richtung auf eine der Anlauffedern verschiebt. Die sich dadurch spannende Anlauffeder dämpft dabei das Drehmoment des Gleichstrommotors ab, so daß ein Festklemmen der Schnecke an dem Antriebszahnsegment so wirkungsvoll vermieden wird. Die vorgespannte Anlauffeder unterstützt zudem bei Drehrichtungsumkehr das Wiederanlaufen des Gleichstrommotors.

## Beschreibung

Die Erfindung betrifft einen elektrischen Stellantrieb für ein Kraftfahrzeug mit einem drehrichtungsumkehrbaren Antriebsmotor und einem diesem nachgeordneten Getriebe.

Ein elektrischer Stellantrieb für ein Kraftfahrzeug ist z. B. in der DE 40 22 849 A1 beschrieben. In der Einleitung dieser Druckschrift wird ausgeführt, daß bei Stellantrieben mit einem Schneckengetriebe, in Abhängigkeit vom Untersetzungsverhältnis zwischen Schneckenwelle und Schneckenrad bzw. dem Steigungswinkel der Gewindeschnecke, ein solches Getriebe entweder nicht selbsthemmend hinsichtlich eines von der Abtriebseite her einwirkenden Drehmomentes ist, oder aber, bei einem geringeren Untersetzungsverhältnis, die Gefahr des Verspannens und Festklemmens des Getriebes besteht, wenn die Schneckenwelle gegen axiale Anschläge fährt.

Die DE 40 22 849 A1 beschreibt eine Sicherungsvorrichtung, die bei einem an sich nicht selbsthemmenden Schneckengetriebe ein Durchdrehen bei einer abtriebsseitigen Belastung verhindert.

Die nachfolgend beschriebene Erfindung beschäftigt sich dagegen mit einem Stellantrieb mit einem höher untersetzten Getriebe, wobei es die Aufgabe war, auf möglichst einfache und kostengünstige Weise ein Festklemmen des Getriebes zu verhindern, wenn der Stellantrieb gegen Endanschläge fährt.

Diese Aufgabe wird erfindungsgemäß dadurch gelöst, daß das Getriebe ein Stirnradgetriebe und ein Schneckengetriebe umfaßt, wobei das mit der Motorwelle verbundene Antriebsritzel und das Abtriebsschneckenrad durch ein ein Stirnrad und eine Schnecke aufweisendes Stufenrad verbunden sind, und daß das Stufenrad auf einer Achse zwischen zwei Anlauffedern gelagert ist, welche das Stufenrad in den Endpositionen des Stellbereiches jeweils mit einer axialen Federkraft beaufschlagen.

Der Gefahr eines Verspannens gegen Anschläge laufender Schneckengetriebe wird somit durch eine Anschlagsdämpfung begegnet, die durch zwei benachbart zu den Stirnflächen des Stufenrades angeordnete Anlauffedern ausgebildet werden. Da die äußeren Anschläge nicht im Einflußbereich der Stellerentwicklung liegen, die inneren Anschläge aber zum sicheren Erreichen der äußeren außerhalb deren Winkelbereiches liegen müssen und somit nicht erreicht werden, wird die Dämpfung durch einen gefederten Axialauslauf des Stufenrades (Schnecke) nach Erreichen eines Anschlages realisiert. Durch die Vorspannung der eingebauten Federn wird ein Federkraftbeginn eingestellt, der oberhalb des Stellkraftbedarfes des Stellantriebs liegt. Die Anlauffedern realisieren folgende Funktionen:
- Bildung der Axiallagerung des Stufenrades durch qualitativ hochwertige Oberflächen in Verbindung mit den Axialanlaufbereichen des Stufenrades, vorzugsweise aus einem PTFE-(= Teflon) gefüllten Kunststoff.
- Bewegungsmöglichkeiten der eingesteckten Federn lassen Ausrichtung auf Axialanlaufbereiche zu und minimieren so durch größtmögliche Anlage die Flächenpressung.
- Realisierung der, Dämpfung durch Hereinfahren des Stufenrades in die Federrate nach Erreichen eines Anschlages.
- Möglichkeit der Verkleinerung des direkt auf die Regelgenauigkeit Einfluß nehmenden Spieles zwischen Stufenrad und Axiallagerung, da unterschiedliche Wärmeausdehnungen des Kunststoffstufenrades und des Gehäuses im Einsatztemperaturfeld -40°C bis 150°C nicht zum Blockieren der Schnecke, sondern lediglich zum Hereinragen in den Dämpfungsbereich führen (auslegbar auf selten genutzten Hochtemperaturbereich).

Vorteilhaft ist auch, die Anlauffedern in Aufnahmetaschen des Gehäuses einzusetzen. Dies ermöglicht eine besonders einfache Montage der Anlauffedern durch einfaches Einstecken, wobei die Achse des Stufenrades nach der Montage die Sicherung der Anlauffedern gegen Herausfallen übernimmt.

Das Haltern der Anlauffedern in Gehäusetaschen bewirkt zudem die Vorspannung der Anlauffedern und verhindert zugleich die ständige Kraftbeanspruchung des sich drehenden Kunststoffstufenrades durch die Anlauffedern und damit eine unzumutbare Reibungsbelastung der Axialanlaufbereiche.

Ein Ausführungsbeispiel eines erfindungsgemäßen Stellantriebs ist in der Zeichnung dargestellt und wird im folgenden anhand der Zeichnung näher erläutert.

Es zeigen:
Figur 1 den Aufbau eines erfindungsgemäßen Stellantriebs ohne Gehäuse,
Figur 2 denselben Stellantrieb in einem geöffnet dargestelltem Gehäuse.

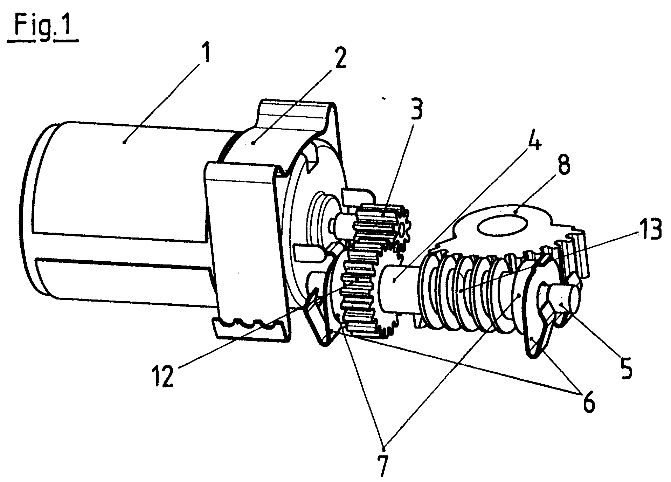

In der Figur 1 ist ein Stellantrieb gezeigt, der zur Betätigung beweglicher Gegenstände in Kraftfahrzeugen, wie z. B. der Drosselklappe oder Fensterscheiben, verwendet werden kann. Zur deutlicheren Darstellung der erfinderischen Details ist der Stellantrieb hier ohne das umgebende Gehäuse gezeigt.

Der Stellantrieb besteht aus einem umsteuerbaren Gleichstrommotor (1), der mittels eines federnd ausgeführten Motorhalters (2) mit dem nicht dargestellten Gehäuse verbunden ist. Um eine möglichst platzsparende, schlanke Gestaltung des Stellantriebs zur erreichen, ist das dem Gleichstrommotor nachgeschaltete Getriebe in der Verlängerung der Motorlängsachse angeordnet.

Das Getriebe umfaßt hierbei ein Stirnradgetriebe und ein Schneckengetriebe, wobei das mit der Motorwelle verbundene Antriebsritzel (3) und das Abtriebsschneckenrad (8) durch ein ein Stirnrad (12) und eine Schnecke (13) aufweisendes Stufenrad (4) verbunden sind.

Das Stufenrad (4) ist auf einer Achse (5) zwischen zwei Anlauffedern (6) gelagert, welche das Stufenrad (4) in den Endpostionen des Stellbereiches jeweils mit einer axialen Federkraft beaufschlagen. Die Anlauffedern (6) sind als zweischenklige Blattfedern ausgebildet, wobei sich die Federschenkel etwa v-förmig gegenüberstehen.

Die stirnseitigen Endabschnitte des Stufenrades (4) sind als radial verbreiterte Abschnitte (Axialanlaufbereiche (7)) ausgebildet und liegen an den Anlauffedern (6) an.

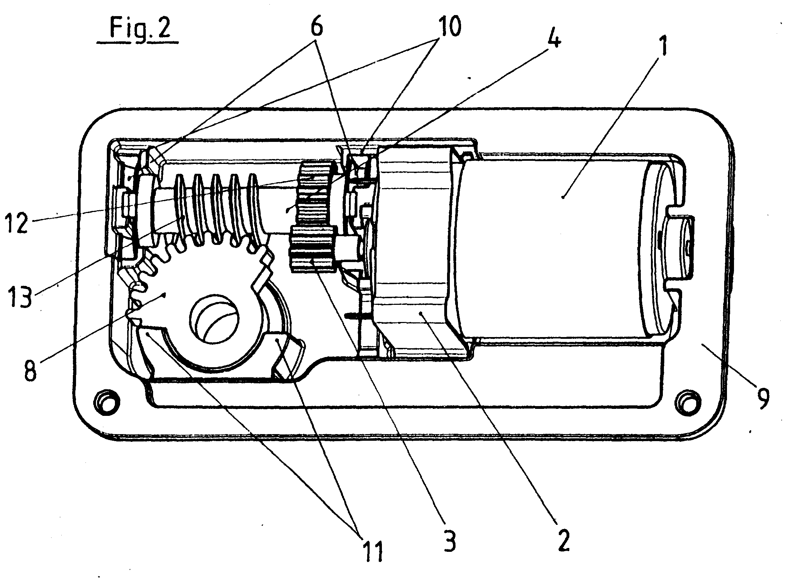

Die Figur 2 zeigt darüber hinaus die Anordnung des vorbeschriebenen Stellantriebs in einem (geöffneten) Gehäuse (9), die Halterung der Anlauffedern in Aufnahmetaschen (10) sowie die internen Gehäuseanschläge (11) für das Abtriebszahnsegment (8).

Die erfindungsgemäße Funktionsweise des Stellantriebs ist die folgende: Eine nicht dargestellte Steuerschaltung bestromt den Gleichstrommotor (1), welcher mittels seines Antriebsritzels (3) das einstückig mit dem Stufenrad (4) ausgebildete Stirnrad (12) antreibt. Die ebenfalls einstückig mit dem Stufenrad (4) ausgebildete Schnecke (13) treibt über das Abtriebszahnsegment (8) eine nicht dargestellte, senkrecht zur Papierebene aus dem Gehäuse (9) herausgeführte Abtriebswelle an.

Der maximale Stellbereich ist dabei entweder durch die internen Gehäuseanschläge (11) oder, in den meisten Fällen, durch die externen Anschläge des durch die Abtriebswelle angetriebenen Gegenstandes vorgegeben. Wird einer der Anschläge erreicht, so kämmt die Schnecke (13) an dem nun feststehenden Abtriebszahnsegment, wodurch sich das Stufenrad (4) auf seiner Achse in Richtung auf eine der Anlauffedern (6) verschiebt. Die sich dadurch spannende Anlauffeder (6) dämpft dabei das Drehmoment des Gleichstrommotors (1) ab, so daß ein Festklemmen der Schnecke (13) an dem Antriebszahnsegment (8) so wirkungsvoll vermieden wird. Die vorgespannte Anlauffeder (6) unterstützt zudem bei Drehrichtungsumkehr das Wiederanlaufen des Gleichstrommotors(1).

### Bezugszeichen

- 1: Gleichstrommotor
- 2: Motorhalter
- 3: Antriebsritzel
- 4: Stufenrad
- 5: Achse
- 6: Anlauffedern
- 7: Axialanlaufbereiche (des Stufenrades)
- 8: Abtriebsschneckenrad (Abtriebszahnsegment)
- 9: Gehäuse
- 10: Aufnahmetaschen
- 11: interne Gehäuseanschläge
- 12: Stirnrad
- 13: Schnecke

## Patentansprüche

1. Elektrischer Stellantrieb für ein Kraftfahrzeug mit
einem drehrichtungsumkehrbaren Antriebsmotor und einem diesem nachgeordneten Getriebe,
**dadurch gekennzeichnet,**
- daß das Getriebe ein Stirnradgetriebe und ein Schneckengetriebe umfaßt, wobei das mit der Motorwelle verbundene Antriebsritzel (3) und das Abtriebsschneckenrad (8) durch ein ein Stirnrad (12) und eine Schnecke (13) aufweisendes Stufenrad (4) verbunden sind,
- daß das Stufenrad (4) auf einer Achse (5) zwischen zwei Anlauffedern (6) gelagert ist, welche das Stufenrad (4) in den Endpostionen des Stellbereiches jeweils mit einer axialen Federkraft beaufschlagen.

2. Elektrischer Stellantrieb nach Anspruch 1, dadurch gekennzeichnet, daß die Anlauffedern (6) in an das Gehäuse angeformte Aufnahmetaschen (10) eingesetzt sind.

3. Elektrischer Stellantrieb nach Anspruch 2, dadurch gekennzeichnet, daß die Anlauffedern (6) als v-förmige, zweischenklige Blattfedern ausgebildet sind.

4. Elektrischer Stellantrieb nach Anspruch 1, dadurch gekennzeichnet, daß die stirnseitigen Endabschnitte des Stufenrades als radial verbreiterte Abschnitte (Axialanlaufbereiche (7)) ausgebildet sind, welche an den Anlauffedern (6) anliegen.

5. Elektrischer Stellantrieb nach Anspruch 1, dadurch gekennzeichnet, daß das Stufenrad (4) aus einem PTFE-gefüllten Kunststoff besteht.
